# EUROPEAN PATENT APPLICATION

(11) **EP 2 372 571 A2**
(43) Date of publication of application: **05.10.2011**
(21) Application number: 10186119.3
(22) Date of filing: 01.10.2010
(51) Int. Cl.: G06F 17/30

(54) **Related search system and method based on resource description framework network**

(30) Priority: 30.03.2010 KR 20100028426
(71) Applicant: Korea Institute of Science & Technology Information, Daejeon 305-333 (KR)
(72) Inventor: Jung, Han Min, 305-333 Daejeon (KR); Kim, Pyung, 305-150 Daejeon (KR); Lee, Seung Woo, 305-333 Daejeon (KR); Lee, Mi Kyung, 305-727 Daejeon (KR); Seo, Dong Min, 361-270 Chungbuk (KR); Sung, Won Kyung, 305-390 Daejeon (KR)
(74) Representative: Collin, Jérôme

(57) **Abstract**

The present invention relate to related search service system and method based on the RDF network that can search and provide an subject or an object which has the same predicate P as related information, on the basis of an RDF network that is formed by extracting a subject, a predicate, and an object, which are units forming an RDF model from a text document including nonstructural sentences not having the structural form, and identifying the entity, depending on whether it is semantically same entity among the each entities.

The related search service method based on RDF network according to the present invention, includes: (a) extracting a subject, a predicate, and an object from a text document composed of the unstructured sentences not having the structured format; (b) creating RDF models composed of the extracted one subject, one predicate, and one object; (c) determining whether there is semantic collision by comparing the RDF models; (d) constructing an RDF network by separating the RDF models when there is semantic collision in the RDF models, and integrating the RDF models when there is no semantic collision; and (e) providing service for searching the subjects or the objects which have the same predicate on the basis of the created RDF network.

## Description

### [Technical Field]

The present invention relates to a related search system and method based on RDF (Resource Description Framework) network, more particularly a related search system and method based on RDF network that provides the related information by extracting subject, predicate, object, that are units forming a RDF model from the text document comprising nonstructural sentences not having the structural form, forming a RDF network by identifying the entity depending on whether it is semantically same entity among the each entities, and searching the subjects or objects having the same predicate based on the RDF network to be capable of providing the related information.

### [Background Art]

In general, a thesaurus refers to the database being compiled the terms such as the synonym, the antonym, the including relationship, and the like with various terms, such that the computer can recognize the meaning of the Web contents.

An ontology in the information technology refers to the working model of the interaction and the entity in the any specific area of the knowledge such as an electronic commerce. In other words, the ontology is the conceptualization the knowledge in the specific domain and specification of the same, and may be mentioned as the network or graph having the relations of the concepts being used in the domain.

The study of the ontology is now researched and developed regarding the natural language processing, and the applicable ontology is established by adding various semantic relations being semiautomatically extracted from the Sejong electronic dictionary and machine translation dictionary and the large scale bundle of words, based on the concept classification system of Kadokawa thesaurus that the effect of an ambiguity solution for the lexical meaning in the Korean-Japanese/Japanese-Korean machine translation system being proven by being researched focusing the method for semiautomatically establishing the ontology for processing the natural language from the existing various language resource.

Further, the Korean noun meaning class structure was automatically established targeting one hundred thousand nouns in 1998 at NLP Research Institute of Ulsan University through the method for deciding the basic data for acquiring knowledge for establishing large scale of ontology, and establishing various knowledge information in a Korean language dictionary and an encyclopedia, the Korean Semantic Network (KSN) have been established since 2002, and the ontology using the Korean language dictionary and the encyclopedia is now established.

For example, a drawing managerial system uses the name of drawings, the brand name, the architect, the design date, the related department and the like for researching, and an application such as a Product Data Management (PDM) uses the part number, the version number, the architect, the approving date, the assembly structure, the configuration data, and the like by organizing the index with them.

However, there is a problem that the system expansion or the access to the ontology being already configured in the existing application is not easy because the form of expression about the ontology different every the system. Further, there is a problem that the ontology describing the relationship between the product data being stored in the repository is not used. Since the above-mentioned ontology includes the design intention as well as the configuration of the product, so it is essential to the use of the intelligent product data.

Meanwhile, the Resource Description Framework (hereinafter, referred to as 'RDF') is the standard established in the W3C (World Wide Web Consortium) for the purpose of providing interoperability between the ontology, and provides the standard mechanism for the definition and storage of the ontology and the switching. In particular, it is able to easily access through Web by using the extensible markup language (hereinafter, referred to as 'XML') syntax with a format for storage and exchange of the ontology, and to provide the standard data format to the information exchange between different systems.

Particularly, a development of IT (Information Technology) industry provides the information and the service through a computer and an internet, however, a massive amount of those is increasing the time and effort required to use by selecting the information and the service that user is needed. Accordingly, the computer make it to understand the terms of web document, so that the study for the intelligent web that is semantic web method that makes the computer to directly operate by the job selecting the information and service that the user is needed, has been actively proceeded. The ontology should be established for the semantic web method, and the ontology can make the computer intelligent, so that it can be used in the various fields for the intelligent service as well as the semantic web method.

The thesaurus using the glossary for information research doesn't need the identifying system, as it uses by setting the special items that represents an equivalent word, an antonym, a synonym, a hypernym, a hyponym, a relevant word, and the like to the each terms, however the ontology can be considered as a kind of network consisting of the concepts not being the terms and their relationships, in it the concepts related to the specific domain is not hierarchically limited and is expressed in the various constitution or the form, thus the identifying system is necessarily needed, and the inference rule supported in order to additionally expands the ontology, so it makes to possible to processing of the knowledge based on the web or sharing the knowledge between application program, reuse, and the like. That is, one of the main difference between the ontology and vocabulary semantic network, thesaurus, and the like is an identifying system.

Meanwhile, RDF is the way that is actively studied regarding the semantic web method, and the study on the XML/RDF content lifecycle management for managing the web contents being expressed by the existing extensible markup language (XML), and the RDF meta information that is coded to the web contents, has been actively proceeded.

In addition, the standardization study of the web ontology is actively proceeding by using RDF for the purpose of the information integration, the study on the data processing model for the business web and the framework establishment and ontology broker model, in order to secure the mutual compatibility between different systems and different protocols in eCo that is a electronic commerce framework being proposed by CommerceNet (the consortium for the purpose of promotion of the electronic commerce using the internet) in order to resolve the problems in the various service and the security application program at the electronic commerce, and the study focusing on the electronic catalogue and the commodity description and coding system and the code are actively proceeding.

### [Disclosure]

### [Technical Problem]

An object of the present invention by considering the above-mentioned circumstances, is to provide the related search system and method based on RDF network, including extracted subject, predicate, object that is the unit forming the RDF model from the text document consisting of the unstructured sentences not having the structured format, identifying the entity whether it is semantically equal entity between the each entities or not, to form the RDF network, and searching subject or object having the equal predicate based on the RDF network to provide the related information.

### [Technical Solution]

In order to achieve the object, a related search service system based on the RDF network according to the present invention includes: an element extracting unit that extracts elements, including a subject, a predicate, and an object, from a text document composed of the unstructured sentences not having the structural format; an element storage that stores the extracted subject, predicate, object; an identifier coder that codes the extracted subject, predicate, and object with a unique identifier, respectively; an RDF constructing unit that creates one RDF model by using the extracted one subject, one predicate, and one object, and constructs an RDF network on the basis of the created RDF model; a search service unit that provides search service based on the RDF network; and a controller that separates the created RDF models when there is semantic collision and integrates the RDF models when there is no semantic collision by determining whether there is semantic collision among the created RDF models such that the RDF network is constructed, and provides service for searching the subjects or the objects which have the same predicate on the basis of the constructed RDF network.

In this configuration, the element extracting unit extracts the subject, the predicate, and the object by matching an extract pattern according to the context of the unstructured sentences with the sentences or phrases of the text document.

Further, the RDF constructing unit creates an identifying system-based RDF model by coding the subject or the object, which constructs the RDF model, with a unique identifier.

Further, the controller integrates RDF models if it is determined that two entities are the same in the RDF models, when constructing the RDF network.

Further, the controller performs character string normalization on the subject, the predicate, and the object.

On the other hand, in order to achieve the object, a related search service method based on an RDF network according to the present invention includes: (a) extracting a subject, a predicate, and an object from a text document composed of the unstructured sentences not having the structured format; (b) creating RDF models composed of the extracted one subject, one predicate, and one object; (c) determining whether there is semantic collision by comparing the RDF models; (d) constructing an RDF network by separating the RDF models when there is semantic collision in the RDF models, and integrating the RDF models when there is no semantic collision; and (e) providing service for searching the subjects or the objects which have the same predicate on the basis of the created RDF network.

Further, the step (a) extracts the subject, the predicate, and the object by matching an extract pattern according to the context of the unstructured sentences with sentences or phrases of the text document.

Further, the step (a) performs character string normalization on the extracted subject, predicate, and object.

Further, the step (b) creates an identifying system-based RDF model by coding the subject the predicate, and the object of the RDF model with unique identifiers.

Further, the step (d) integrates the RDF models, when it is determined later that two entities are the same.

### [Advantageous Effects]

According to the present invention, it is possible to construct an RDF model and an RDF network by extracting a subject S, a predicate P, and an object O from a text document composed on unstructured sentences not having a structure format, and it is also possible to implement search service providing related information by searching a subject or an object that have the same predicate on the basis of the RDF network.

### [Description of Drawings]

FIG. 1 is a diagram schematically illustrating the configuration of a related search service system based on the RDF network according to an embodiment of the present invention;
FIG. 2 is a flowchart illustrating the related search service method based on the RDF network according to an embodiment of the present invention;
FIG. 3 is a diagram illustrating an example of a process of providing search service by constructing an RDF network according to an embodiment of the present invention;
FIG. 4 is a diagram illustrating an example providing a subject or an object having the same predicate for the related information according to an embodiment of the present invention.

### [Mode for Invention]

The above and other objects, features and advantages of the present invention will become apparent from the following description of preferred embodiments given in conjunction with the accompanying drawings. Hereinafter, the embodiment according to the present invention will be described in more detail with reference to the accompanying drawings.

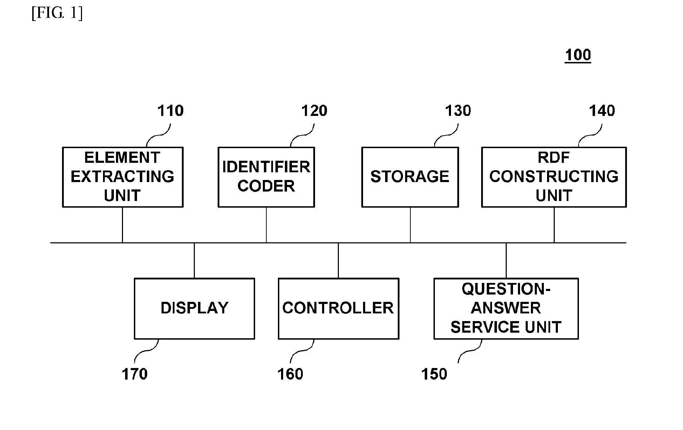

FIG. 1 is a diagram schematically illustrating the configuration of a related search service system based on the RDF network according to an embodiment of the present invention.

Referring to FIG. 1, the related search service system 100 based on the RDF network according to the present invention includes an element extracting unit 110, an identifier coder 120, a storage 130, an RDF constructing unit 140, a search service unit 150, a controller 160, and a display 170.

The element extracting unit 110 extracts the components of the RDF model such as the subject, the predicate, the object, and the like from the input text document.

In this configuration, the element extracting unit 110 extracts a subject, a predicate, and an object by matching an extraction pattern according to the context of unstructured sentences with the sentences or phrases of a text document.

The identifier coder 120 codes the subject, the predicate, the object of the RDF model with unique identifiers.

The storage 130 may be a database, stores the extracted subject, predicate, and object into predetermined storage areas, stores an RDF model composed of one subject, one predicate, and one object, or stores an RDF network where one or more RDF models are combined

The RDF constructing unit 140 creates the RDF model by using the extracted one subject, one predicate, one object, or constructs the RDF network on the basis of the created RDF model.

The search service unit 150 provides the search service based on the RDF network. That is, the search service unit 150 searches a subject or an object having the same predicate on the basis of the RDF network where one or more RDF models are combined, from the element storage 130.

The controller 160 determines whether there is semantic collision in the created RDF models, separates them when there is collision, or integrates them when there is no collision such that the RDF network is constructed, and provides service for searching subjects or objects which have the same predicate on the basis of the constructed RDF network.

Further, the controller 160 constructs the RDF network by integrating two same entities.

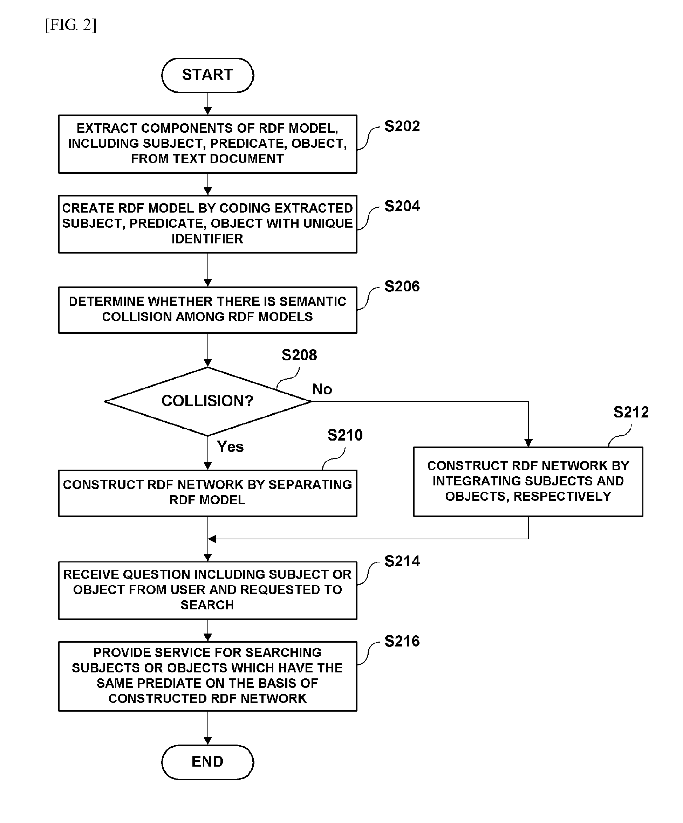

FIG. 2 is a flowchart illustrating the related search service method based on the RDF network according to an embodiment of the present invention.

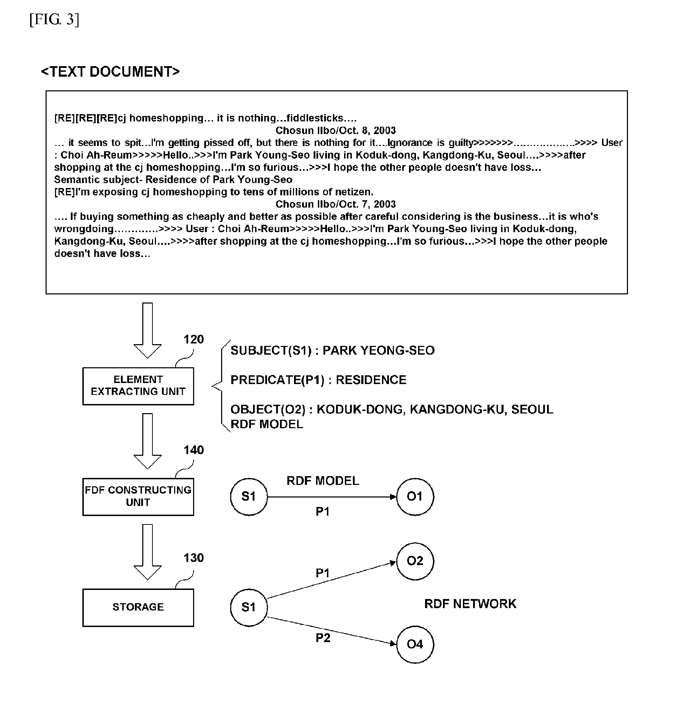

Referring to FIG. 2, the related search service system 100 based on the RDF network according to the present invention extracts the component of the RDF model, such as a subject, a predicate, and an object, from a text document composed of unstructured sentences not having the structured format, as shown in FIG. 3 (S202).

In this process, the question-answer service system 100 based on RDF search extracts the subject, the predicate, and the object by matching an extract pattern according to the context of the unstructured sentences (for example, %people %living in %address) with the sentences or phrases of the text document. That is, as shown in FIG. 3, for example 'Park Young-Seo' is extracted as the subject S1, 'residence' is extracted as the predicate P1, and 'Koduk-dong, Kangdong-Ku, Seoul' is extracted as the object O1 by matching the extract pattern with the sentences or phrases of the text document.

Then, the related search system 100 based on the RDF network creates the RDF model by coding the extracted subject, predicate, and object with unique identifiers, because the recognition between the entities may be in confusion, when the extracted results are simply collected (S204).

Further, the related search service system based on the RDF network codes the subject S, predicate P, and object O with unique identifiers, for example, URI (Uniform Resource Identifier to construct the RDF model.

In the embodiment of the present invention, that constructing one subject S, one object and one predicate P is referred to as an 'RDF model', and that constructing the format that two or more objects are combined with one subject, as an example of combining two or more RDF models, is referred to as an 'RDF network'.

Then, the related search service system 100 based on the RDF network determines whether there is semantic collision among the created RDF models (S206). That is, as shown in FIG. 3, the system determines whether there is semantic collision among S1, S2, S3,...,Sn, which are subjects S, among the RDF models, and determines whether there is semantic collision among O1, O2, O3,... which are objects.

Thereafter, the related search service system 100 based on the RDF network constructs the RDF network (S210) by separating the created RDF models into different RDF models, when there is semantic collision among the created RDF models (YES in S208), and constructs the RDF network (S212) by integrating the subjects and objects, respectively, where there is no collision (NO in S208).

For example, when the subject S1 is 'Park Yeong-Seo', the subject S2 is 'Park Yeong-Seo', the predicate P1 is 'residence', the predicate P2 is 'residence', the object O1 is 'Koduk-dong, Kangdong-Ku, Seoul', and the object 02 is 'Koduk-dong, Kangdong-Ku, Seoul', there is no semantic collision, such that the controller 160 integrates S2 into S1 and 02 into O1 in the RDF constructing unit 140, thereby constructing the RDF model composed of S1-P1-O1.

However, when the subject S1 is 'Park Yeong-Seo', the subject S3 is 'Park Yeong-Seo', the predicate P1 is 'residence', the predicate P3 is 'residence', the object 03 is 'Koduk-dong, Kangdong-Ku, Seoul', the object 03 is 'Gaepo-dong, Kangnam-Ku, Seoul', there is semantic collision; therefore, the controller 160 separates S1 from S3 and O1 from 03 in the RDF constructing unit 140 such that an RDF network composed of an RDF model composed of S1-P1-O1 and an RDF model composed of S3-P3-03 is constructed.

In this configuration, the related search service system 100 based on the RDF network constructs the RDF network by integrating two entities, when determining that the entities are the same.

Then, the related search service system 100 based on the RDF network stores the constructed RDF network into the storage 130 (S214).

Further, the related search service system 100 based on the RDF network provides the search service of subjects or objects which have the same predicate on the basis of the constructed RDF network (S216).

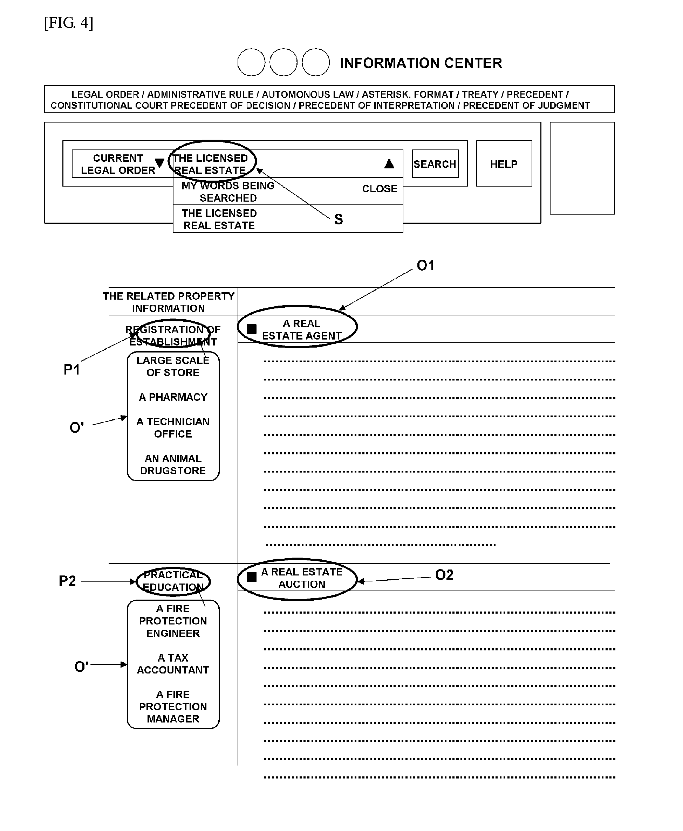

For example, the related search service system 100 based on the RDF network provides a subject S 'licensed real estate agent' with 'real estate agent office' that is an object O1 having 'opening registration' that is a predicate P1 and other objects O' such as 'pharmacy', 'technician', and 'animal drugstore', as related information, as shown in the FIG. 4. FIG. 4 is a diagram illustrating an example providing a subject or an object having the same predicate for the related information according to an embodiment of the present invention.

Further, the related search service system 100 based on the RDF network may provide a subject S 'the licensed real estate agent' with 'real estate auction' that is an object 02 having 'practical education' that is an predicate P2 and other objects O' such as 'fire protection engineer', 'tax accountant', and 'fire protection manager', as related information, as shown in the FIG. 4.

In the embodiment of the present invention, the related search service system 100 based on the RDF network processes in the unit of the text document, such that the RDF model is implemented for each text document, and then the RDF network is constructed by comparing the existing model(s), subject, and object to ascertain whether there is collision among the RDF models, and integrating or separating the RDF models and coding them with unique identifiers.

According to the present invention described above, it is possible to implement related search service system and method based on the RDF network that can search and provide an subject S or an object O which has the same predicate P as related information, on the basis of an RDF network that is formed by extracting a subject S, a predicate P, and an object O, which are units forming an RDF model from a text document including nonstructural sentences not having the structural form, and identifying the entity, depending on whether it is semantically same entity among the each entities.

While the present invention has been described in connection with certain exemplary embodiments, it is to be understood that the invention is not limited to the disclosed embodiments, but, on the contrary, is intended to cover various modifications and equivalent arrangements included within the spirit and scope of the appended claims, and-equivalents thereof.

### [Industrial Applicability]

The present invention can apply to the system or service constructing the ontology by extracted the RDF model from the text document.

In addition, the present invention can apply to the system or service providing the semantic web service or the search service.

## Claims

1. A related search service method based on an RDF (Resource Description Framework) network, comprising:
(a) extracting a subject, a predicate, and an object from a text document composed of the unstructured sentences not having the structured format;
(b) creating RDF models composed of the extracted one subject, one predicate, and one object;
(c) determining whether there is semantic collision by comparing the RDF models;
(d) constructing an RDF network by separating the RDF models when there is semantic collision in the RDF models, and integrating the RDF models when there is no semantic collision; and
(e) providing service for searching the subjects or the objects which have the same predicate on the basis of the created RDF network.

2. The related search service method based on the RDF network according to claim 1, wherein the step (a) extracts the subject, the predicate, and the object by matching an extract pattern according to the context of the unstructured sentences with sentences or phrases of the text document.

3. The related search service method based on the RDF network according to claim 1, wherein the step (a) performs character string normalization on the extracted subject, predicate, and object.

4. The related search service method based on the RDF network according to claim 1, wherein the step (b) creates an identifying system-based RDF model by coding the subject the predicate, and the object of the RDF model with unique identifiers.

5. The related search service method based on the RDF network according to claim 1, wherein the step (d) integrates the RDF models, when it is determined later that two entities are the same.

6. A related search service system based on the RDF network, comprising:
an element extracting unit that extracts elements, including a subject, a predicate, and an object, from a text document composed of the unstructured sentences not having the structural format;
an element storage that stores the extracted subject, predicate, object;
an identifier coder that codes the extracted subject, predicate, and object with a unique identifier, respectively;
an RDF constructing unit that creates one RDF model by using the extracted one subject, one predicate, and one object, and constructs an RDF network on the basis of the created RDF model;
a search service unit that provides search service based on the RDF network; and
a controller that separates the created RDF models when there is semantic collision and integrates the RDF models when there is no semantic collision by determining whether there is semantic collision among the created RDF models such that the RDF network is constructed,
and provides service for searching the subjects or the objects which have the same predicate on the basis of the constructed RDF network.

7. The related search service system based on the RDF network according to claim 6, wherein the element extracting unit extracts the subject, the predicate, and the object by matching an extract pattern according to the context of the unstructured sentences with the sentences or phrases of the text document.

8. The related search service system based on the RDF network according to claim 6, wherein the RDF constructing unit creates an identifying system-based RDF model by coding the subject or the object, which constructs the RDF model, with a unique identifier.

9. The related search service system based on the RDF network according to claim 6, wherein the controller integrates RDF models if it is determined that two entities are the same in the RDF models, when constructing the RDF network.

10. The related search service system based on the RDF network according to claim 6, wherein the controller performs character string normalization on the subject, the predicate, and the object.
